(19) Europäisches Patentamt
European Patent Office
Office européen des brevets

(11) **EP 3 989 087 A1**

(12) **EUROPEAN PATENT APPLICATION**

(43) Date of publication:
**27.04.2022 Bulletin 2022/17**

(51) International Patent Classification (IPC):
**G06F 17/18** (2006.01)     **G06N 7/00** (2006.01)

(21) Application number: **20203717.2**

(52) Cooperative Patent Classification (CPC):
**G06N 7/005; G06F 17/18; G06N 20/10**

(22) Date of filing: **23.10.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Secondmind Limited**
**Cambridge, Cambridgeshire CB2 1LA (GB)**

(72) Inventors:
• **SIMPSON, Fergus**
  **Cambridge, Cambridgeshire CB2 1LA (GB)**
• **DURRANDE, Nicolas**
  **Cambridge, Cambridgeshire CB2 1LA (GB)**

(74) Representative: **EIP**
**Fairfax House**
**15 Fulwood Place**
**London WC1V 6HU (GB)**

(54) **COMPUTATIONAL INFERENCE**

(57)    A computer-implemented method of processing a plurality of data points, each data point of the plurality of data points comprising observations of one or more quantities for a respective input within an input space, to predict posterior probability densities of values of the plurality of quantities at one or more further inputs within the input space. The method includes: sampling a set of hyperparameter vectors from a predetermined prior distribution, each hyperparameter vector in the set comprising respective hyperparameter values characterising a plurality of spectral components of a kernel for a multi-output Gaussian process model, each of the plurality of spectral components having a positive-definite matrix-valued coefficient and extending over a respective bounded region of a spectral domain; determining, for each of the hyperparameter vectors in the set, a likelihood for the plurality of data points under the Gaussian process model with the respective hyperparameter values of that hyperparameter vector; iteratively, until a stopping condition is satisfied: sampling a new hyperparameter vector from the predetermined prior distribution, the new hyperparameter vector comprising a new set of hyperparameter values; determining a likelihood of the plurality of data points under the Gaussian process model with new set of hyperparameter values; and in the event that the determined likelihood for the new hyperparameter vector exceeds a lowest determined likelihood for the hyperparameter vectors in the set: estimating a mass of the predetermined prior distribution enclosed by the current set of hyperparameter vectors; storing an intermediate data item indicating the lowest determined likelihood of any hyperparameter vector within the set and the estimated mass of the predetermined prior distribution enclosed by the set of hyperparameter vectors; and replacing the hyperparameter vector having the lowest determined likelihood with the new hyperparameter vector, whereby to update the set of hyperparameter vectors. The method further includes predicting, using the stored intermediate data items, the posterior probability densities of the values of the one or more of quantities at the one or more further inputs within the input space.

Fig. 2

**Description**

<u>Technical Field</u>

The present invention relates to the computational implementation of Gaussian process modelling techniques. The invention has particular, but not exclusive, relevance to predicting measurable characteristics of a physical system.

<u>Background</u>

Gaussian process (GP) models provide a powerful and flexible means of inferring statistical information from empirical data. GP models have been applied to a wide range of machine learning tasks, for example regression and classification, in which hyperparameters of the GP model are typically learned, for example using stochastic gradient descent or related algorithms. GP models are particularly well-suited to modelling systems in which data is sparse or costly to obtain, for example where data points correspond to characteristics of a physical system measured under respective sets of parameter values.

In a typical setting, one or more characteristics of a system are measured for a given input $x_i$. The measurements for each input are collected in an output $y_i$ (which may be a scalar or vector quantity), which is assumed to be related to a latent GP $f(x_i)$ evaluated at the input $x_i$, where $f \sim GP(0, K_\theta)$. The prior distribution $p(f)$ of the GP $f$ depends on a kernel $K_\theta(x,x')$ parameterised by a set of hyperparameters $\theta$. The relationship between the observed outputs $y_i$ and the GP is given by an observation model or likelihood, where a common choice is to assume that the outputs $y_i$ are observations of the GP corrupted by Gaussian noise such that $y_i = f(x_i) + \varepsilon_i$, where $\varepsilon_i \sim N(0, \Sigma_\theta)$ for some (unknown, usually diagonal) noise covariance $\Sigma_\theta$, where the elements of the noise covariance are treated as additional hyperparameters of the model. The resultant posterior GP model can be used to predict a probabilistic distribution of the one or more characteristics at a given input location $x^*$, and/or to determine properties of an unobservable latent signal underlying the data, including the predictive uncertainty.

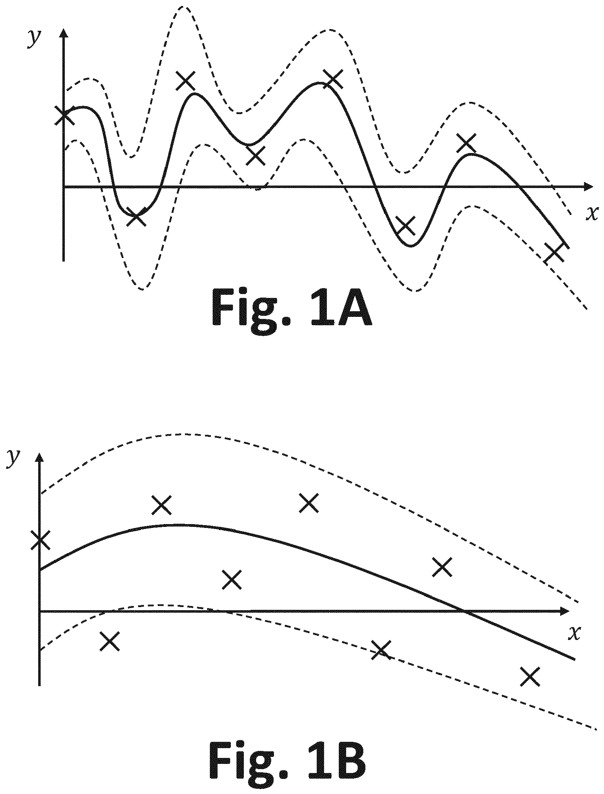

The kernel (also referred to as the covariance function) of a GP determines characteristics of how the GP varies as a function of the input location $x$. Figures 1A and 1B show an illustrative example in which two GP models with respective different hyperparameter values have been fitted to a set of training data containing measurements of a scalar quantity $y$ at eight evenly-spaced input locations $x$. In each frame, the solid curve represents a mean function of the GP and the dashed curves represent a fixed number of standard deviations above and below the mean function. It is observed that the model of Figure 1A varies on a shorter length scale than the GP of Figure 1B. Although the model of Figure 1A more closely follows the training data and predicts narrower confidence intervals, it is not clear that the model of Figure 1A would actually provide a superior prediction of a further measurement at a new, unseen input location, and in fact the model of Figure 1A appears to "overfit" the training data. By contrast, the model of Figure 1B appears to "underfit" the training data, and does not capture the oscillatory pattern of the data points.

For most GP models, the functional form of the kernel is specified by the user, and this choice can strongly affect the ability of the GP to fit the dataset. A good choice of kernel often requires *a priori* knowledge about patterns or structures expected within the data, and this knowledge is not always available. It was shown in Gaussian Process Kernels for Pattern Discovery and Extrapolation, A. Wilson and R. Adams, International Conference on Machine Learning, 2013, that by treating the spectral density of a kernel as a mixture of Gaussian components in frequency space, a tractable approximation can be determined for a wide range of kernels for single output GPs, without *a priori* knowledge about the dataset to be modelled. In this way, model selection (i.e. selecting an appropriate kernel) is automated and free of user bias, allowing patterns and structures within data to be discovered in a truly *a posteriori* manner. The use of GP models based on spectral mixture kernels is particularly valuable for the modelling of complex physical systems in which the underlying dynamics are difficult to model. A further approach was discussed in Band-Limited Gaussian Processes: The Sinc Kernel, F. Tobar, arXiv: 1909.07279, 2019, in which the mixture of Gaussian components are replaced with a mixture of rectangular spectral components, resulting in single-output GPs with band-limited spectra for use in applications such as stereo amplitude modulation and band-pass filtering.

During conventional GP inference, hyperparameters of a GP model are adjusted to best fit a given dataset, for example using maximum *a posteriori* (MAP) estimation or maximum likelihood estimation. Although these methods provide principled approaches for determining a set of hyperparameters for the model, restricting the model to a single set of hyperparameters risks underestimating the predictive uncertainty of the model and is prone to overfitting, particularly when the number of hyperparameters is large and/or the number of data points is small, in which case several different configurations of hyperparameter values may be comparably successful at modelling the data, resulting in an increased predictive uncertainty that would not be captured by a point estimate of the hyperparameters as discussed above. For applications in which a GP model is used to inform a decision-making process, underestimating the predictive uncertainty may result in costly or dangerous decisions.

In order to overcome the above shortcomings of conventional GP inference methods, marginalised GP models have been developed (see Approximate Inference for Fully Bayesian Gaussian Process Regression, V. Lachland and C. Rasmussen, Proceedings of Machine Learning Research, 2020), in which the hyperparameters $\theta$ are not assumed to take fixed values but are instead assumed to be distributed according to a hyperparameter prior $\theta \sim p(\theta)$, such that the resultant predictive distribution contains an integral over a posterior hyperparameter density, thereby including contributions from different regions of the hyperparameter space, in particular those which give rise to a high marginal likelihood for the data. In the example of Figures 1A and 1B, each of the models would provide some contribution to the predictive posterior, though possibly not as much contribution as an intermediate model with hyperparameter values somewhere between those of Figures 1A and 1B.

The hyperparameter posterior density described above is not analytically tractable and must therefore be treated numerically. In the case of high-dimensional hyperparameter spaces resulting from spectral mixture kernels, the marginal likelihood surface is highly complex and possibly multimodal. This presents a computational challenge as to how to capture the posterior hyperparameter density without placing excessive demands on computational resources such as processors and memory. The article Nested Sampling for General Bayesian Computation, J. Skilling, Bayesian Analysis, 2006, introduced a sampling method for calculating model evidence in a general Bayesian setting.

Summary

According to a first aspect of the present invention, there is provided a computer-implemented method of processing a plurality of data points, each data point of the plurality of data points comprising observations of one or more quantities for a respective input within an input space, to predict posterior probability densities of values of the plurality of quantities at one or more further inputs within the input space. The method includes: sampling a set of hyperparameter vectors from a predetermined prior distribution, each hyperparameter vector in the set comprising respective hyperparameter values characterising a plurality of spectral components of a kernel for a multi-output Gaussian process model, each of the plurality of spectral components having a positive-definite matrix-valued coefficient and extending over a respective bounded region of a spectral domain; determining, for each of the hyperparameter vectors in the set, a likelihood for the plurality of data points under the Gaussian process model with the respective hyperparameter values of that hyperparameter vector; iteratively, until a stopping condition is satisfied: sampling a new hyperparameter vector from the predetermined prior distribution, the new hyperparameter vector comprising a new set of hyperparameter values; determining a likelihood of the plurality of data points under the Gaussian process model with new set of hyperparameter values; and in the event that the determined likelihood for the new hyperparameter vector exceeds a lowest determined likelihood for the hyperparameter vectors in the set: estimating a mass of the predetermined prior distribution enclosed by the current set of hyperparameter vectors; storing an intermediate data item indicating the lowest determined likelihood of any hyperparameter vector within the set and the estimated mass of the predetermined prior distribution enclosed by the set of hyperparameter vectors; and replacing the hyperparameter vector having the lowest determined likelihood with the new hyperparameter vector, whereby to update the set of hyperparameter vectors. The method further includes predicting, using the stored intermediate data items, the posterior probability densities of the values of the one or more of quantities at the one or more further inputs within the input space.

The use of a multi-output GP model with spectral components each having a positive-definite matrix-valued coefficient and extending over a finite region of the spectral domain results in a model which properly captures correlations between the obtained quantities, resulting in more accurate predictions, particularly for highly correlated quantities. By using a marginalised model in which hyperparameter vectors are distributed according to a predetermined prior, overfitting is avoided, and the resulting predictions include principled, conservative uncertainty estimates. As the hyperparameter vectors are sampled, the set of hyperparameter vectors moves towards regions of increasingly high likelihood at a predictable rate, resulting in greater contributions from regions resulting in a high marginal likelihood of the data, whilst avoiding regions of low likelihood, thereby yielding highly accurate predictions, even for multi-modal likelihood surfaces. Due to the predictable manner in which the hyperparameter vectors move toward regions of high likelihood, the predictions are achieved with significantly reduced demands on computational resources, including processors and memory, compared with other sampling methods, for example Hamiltonian Monte Carlo.

In some examples, the input for each data point corresponds to a set of values for parameters of a physical system, such as vehicle or part of a vehicle, and the one or more quantities are measurable characteristics of the physical system. In the case of a physical system, obtaining large numbers of data points may be time-consuming and/or costly. By using the method set out above, accurate predictions can be made of the measurable characteristics of the physical system for unseen values of the parameters, even when the data is sparse, whilst also yielding principled, conservative uncertainty estimations. The predictions generated by such a method can be used to determine further sets of values for the parameters of the physical system, for example using Bayesian optimisation, to optimise the physical system in an efficient and reliable manner.

Further features and advantages of the invention will become apparent from the following description of preferred embodiments of the invention, given by way of example only, which is made with reference to the accompanying drawings.

Brief Description of the Drawings

Figures 1A and 1B respectively show two examples of Gaussian process models used to model a common set of data points, given different sets of hyperparameters;

Figure 2 is a schematic block diagram representing a data processing system arranged to perform computational inference in accordance with examples;

Figure 3 is a flow diagram representing an example of a method performed by the data processing system of Figure 2;

Figure 4 illustrates an example of a sampling method;

Figure 5 illustrates schematically the observability of a spectral component of a GP model;

Figure 6 shows an example of cross-spectra for a two-channel Gaussian process model using a kernel based on a mixture of Gaussian spectral components;

Figure 7 shows a maximum attainable correlation coefficient between channels of a two-channel Gaussian process model using a kernel based on a mixture of Gaussian spectral components;

Figure 8 shows an example of cross-spectra for a two-channel Gaussian process model using a kernel based on a mixture of rectangular spectral components;

Figure 9 shows a maximum attainable correlation coefficient between channels of a two-channel Gaussian process model using a kernel based on a mixture of rectangular spectral components;

Figure 10A shows samples drawn from a process formed of two Gaussian process components with a transition point, in which correlations between components are not taken into account;

Figure 10B shows samples drawn from a process formed of two Gaussian process components with a transition point, in which correlations between components are taken into account;

Figure 11 is a schematic block diagram representing the data processing system of Figure 2 being used to predict characteristics of a physical system.

Detailed Description

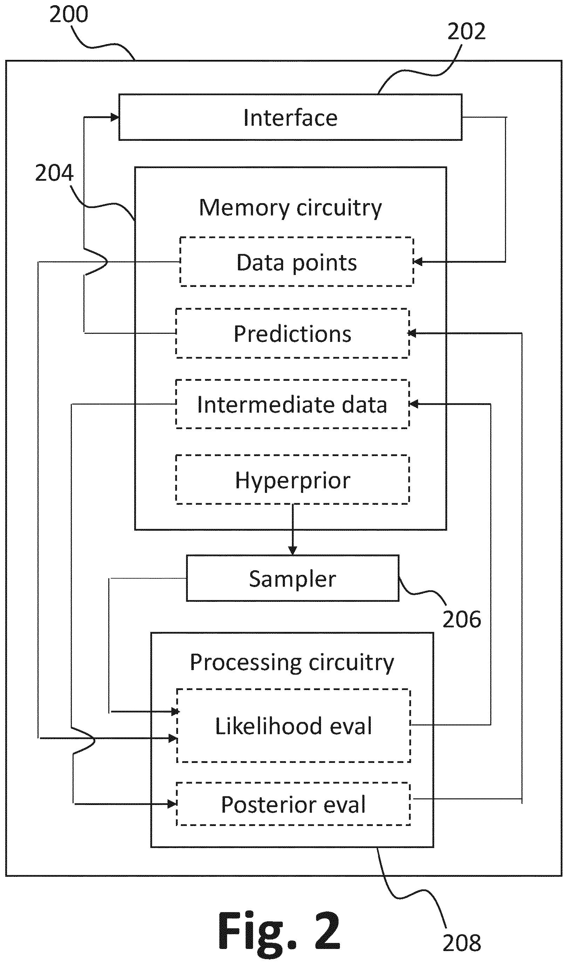

Figure 2 shows an example of a data processing system 200 arranged to perform methods in accordance with an embodiment of the present invention. The system 200 may be embodied as a single computing device or using multiple networked computing devices. The system 200 may include various additional components not shown in Figure 2, such as one or more power supplies, input/output devices and the like. The data processing system 200 includes an interface 202 which is arranged to receive data points each comprising measurements of one or more quantities at a respective input location, and to output predictive information for the one or more quantities at a further one or more input locations. In an example, the interface 202 includes a user interface via which a user can enter data into the system 200, and via which the predictive information is output to the user. In other examples, the interface may additionally or alternatively include one or more input devices such as, for example, a microphone receiver, a radio receiver, a network interface, a camera, a sensor, or any other component capable of receiving or generating data points each comprising measurements of one or more quantities at a respective input location.

The data processing system 200 includes memory circuitry 204, which in this example includes volatile random-access memory (RAM), in particular static random-access memory (SRAM) and dynamic random-access memory (DRAM). In other examples, memory circuitry may further include non-volatile storage such as a solid state drive (SSD) or a hard disk drive (HDD). The memory circuitry 204 is arranged to receive data points from the interface 202, either in a streamed or batch fashion, and to store the received data points along with various other data for determining predictive information in accordance with the present invention, as will be explained in more detail hereafter.

The data processing system 200 further includes a sampler 206, which in the present example is a hardware component arranged to randomly sample, from a predetermined prior distribution, sets of hyperparameter values for a GP model with a spectral mixture kernel. Each sampled set of hyperparameter values is referred to as a hyperparameter vector, though the exact data structure in which hyperparameter values is not necessarily a vector. The sampler includes a source of randomness or pseudo-randomness for achieving the random sampling, and may be implemented in hardware or software, for example as program code executed by processing circuitry of the data processing system 200.

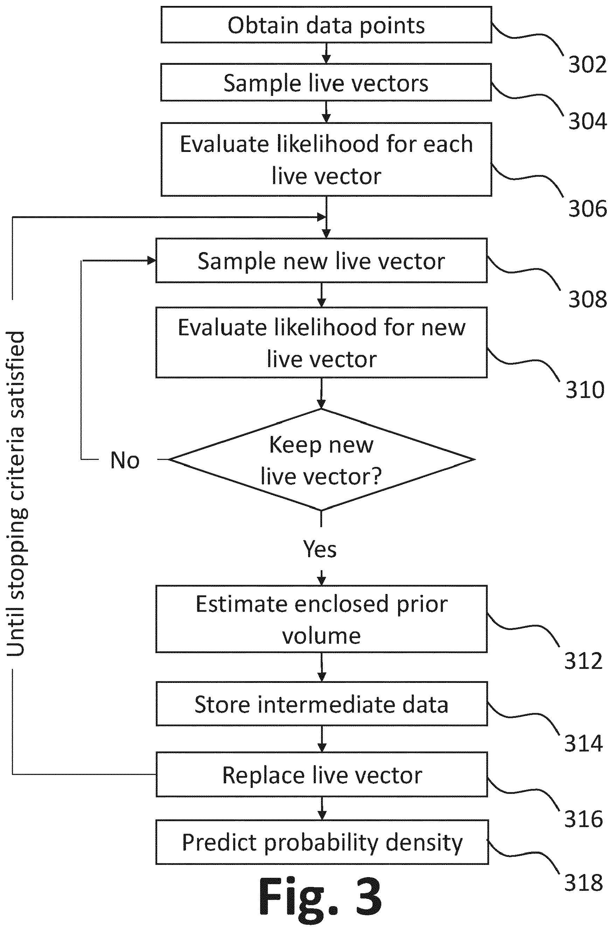

The data processing system 200 includes processing circuitry 208, which in this example includes a CPU with one or more processor cores. In other examples, processing circuitry may include, additionally or alternatively, one or more application specific integrated circuits (ASICs) and/or specialist processing units such as a digital signal processor (DSP), a graphics processing unit (GPU), or a neural processing unit (NPU). The processing circuitry 208 is primarily used for two operations: likelihood evaluation, in which a likelihood of the set of data points is evaluated under a GP model with a given set of hyperparameters; and posterior evaluation, in which a predictive posterior probability distribution at a given input location is evaluated under the GP model with a given set of hyperparameters. These operations, and the way in which the operations are used in accordance with the present invention, will be described in more detail with reference to Figure 3.

Figure 3 shows an example of a method performed by the data processing system 200 of Figure 2. The system 200 obtains, at 302, a set of data points each comprising measurements of one or more quantities at a respective input location. An input location may be a scalar or vector quantity and may include, for example, a time and/or spatial location at which the one or more quantities were measured, or may be any other quantifiable independent variable, for example indicating parameters of a physical system. In an example where the input locations corresponds to times, the data points are time series data points. The one or more measured quantities may be physical quantities derived from outputs of one or more sensors.

The system 200 randomly samples, at 304, a set of $N$ hyperparameter vectors from a predetermined prior distribution $p(\theta)$ parameterised in the memory circuitry 208. As mentioned above, each hyperparameter vector includes a set of hyperparameter values for a GP model. The hyperparameter values characterise spectral components of a kernel. Any translation-invariant or stationary kernel $K_{ij}(x - x') \equiv K_{ij}(r)$ of a multi-output GP can be represented in frequency space by a cross-spectral density $S_{ij}(v)$, which is a Fourier dual of the kernel such that that $K_{ij}(r) = \mathcal{F}(S_{ij}(v))$, with $\mathcal{F}$ denoting a Fourier transform. Restricting the cross-spectral density to being symmetric such that $S_{ij}(v) = S_{ij}(-v)$ ensures that the components of the resultant GP are real-valued. The cross-spectral density can be approximated using a superposition of $Q$ pairs of spectral components, resulting in a spectral mixture as shown by Equation (1):

$$S_{ij}(v) = \sum_{q=1}^{Q} \frac{1}{2} A_{ij}^q \left[ B\left(v; \mu_q, w_q\right) + B\left(v; -\mu_q, w_q\right) \right], \qquad (1)$$

where $B(v; \mu_q, w_q)$ is a function which determines the shape of the spectral components in frequency space, $\mu_q$ is a parameter which determines the position of the $q^{th}$ spectral component, and $w_q$ is a parameter which determines the extent of the $q^{th}$ spectral component in frequency space. $A^q$ is a positive-definite matrix-valued coefficient, with components given by $A_{ij}^q$, where $i,j \in \{1, ..., D\}$ denote the $D$ outputs of the GP. For a single-output GP, $D = 1$ and the indices $i, j$ can be omitted. For a multi-output GP, $D > 1$ and it is convenient to parameterise each $A^q$ by its lower triangular Cholesky factor $L$ such that $A^q = L^q(L^q)^T$, which ensures that the resulting matrix $A^q$ is positive-definite Examples of specific choices for the function $B$ will be discussed in further detail hereinafter, along with corresponding expressions for the kernel $K_{ij}(r)$.

For each live vector in the set of sampled hyperparameter vectors, the system 200 evaluates, at 306, a likelihood of the set of data points under the GP model with hyperparameter values corresponding to that hyperparameter vector. In this way, each live point is associated with a likelihood indicating how well the corresponding hyperparameter values are able to fit the data. Returning to the example of Figure 1, a live point corresponding to the hyperparameter values of Figure 1A may have a higher likelihood than a live point corresponding to the hyperparameter values of Figure 1B. The likelihood is given by Equation (2):

$$p(\mathbf{y}|\theta) = \mathrm{N}(\mathbf{y}|0, \mathbf{K}_\theta + \mathbf{\Sigma}_\theta), \qquad (2)$$

Where $\mathbf{y} = \{y_i\}_{i=1}^{N}$, $\theta$ is a sampled hyperparameter vector with components corresponding to a set of hyperparameter values, $\mathbf{K}_\theta$ is a covariance matrix with elements given by covariances between respective outputs at the data points, and $\Sigma_\theta$ is a diagonal noise covariance matrix for the sampled hyperparameter vector.

Having evaluated the likelihood for each hyperparameter vector in the set, the system 200 initiates a procedure in which the set of hyperparameter vectors is iteratively updated in such a way that the set of "live" hyperparameter vectors will gradually move towards regions of higher likelihood. The iterative procedure begins with the system 200 randomly sampling, at 308, a new hyperparameter from the prior distribution $p(\theta)$, the new hyperparameter vector corresponding to a new set of hyperparameter values. The sampling may be performed in a completely random fashion, though for high-dimensional hyperparameter spaces this may result in many samples being needed before an acceptable sample is found (i.e. having a sufficiently high likelihood, as described below), particularly for later iterations. In another example, Markov Chain Monte Carlo is used, starting from a randomly selected live hyperparameter vector and ensuring enough steps are taken that the sampled hyperparameter vector is effectively independent from the selected live hyperparameter vector. In other examples, bounding ellipsoids, which extend slightly beyond the live set of hyperparameter vectors, may be determined from the covariance of the live set, as described in the article MULTINEST: an efficient and robust Bayesian inference tool for cosmology and particle physics, F. Feroz et al, MNRAS, 2009. These ellipsoids tend to track the macroscopic contours of the likelihood surface. By sampling within these ellipsoids, for example using slice sampling or any other suitable random sampling strategy, an acceptable, independent new hyperparameter vector is found far more efficiently than using naive sampling methods, even for high-dimensional hyperparameter spaces.

The system 200 evaluates, at 310, a likelihood of the set of data points under the GP model with the new hyperparameter values corresponding to the new hyperparameter vector. If this likelihood is not higher than the lowest likelihood determined for any of the current set of live hyperparameter vectors, the new hyperparameter vector is discarded and the system 200 returns to 308. If the likelihood is higher than the lowest likelihood determined for any of the current set of live hyperparameter vectors, the procedure progresses to 312, in which the system 200 estimates a mass of the prior distribution $p(\theta)$ enclosed by the current set of live hyperparameter vectors. The mass of the prior distribution enclosed by the live hyperparameter vectors is given by the quantile function $X$, which represents the mass of the prior distribution $p(\theta)$ lying below a given likelihood $\psi$, so that $\psi(X = 0)$ and $\psi(X = 1)$ are the minimum and maximum likelihood values under the support of the prior distribution. It can be shown that the expected value of $X$ at a given iteration is given by $\langle X_i \rangle = [n_L/(n_L + 1)]^i$, where $i = 1, ..., M$ is the iteration number. In the present example, the value of $X$ estimated at 312 is the expected value $\langle X_i \rangle$, though other options are possible, for example using further sampling.

The system 200 stores, at 314, intermediate data indicating the lowest likelihood determined for any of the current set of live hyperparameter vectors and the mass of the prior distribution estimated at 312. Having stored the intermediate data, the system 200 updates the current set of live hyperparameter vectors by replacing, at 316, the live vector having the lowest determined likelihood with the new live vector sampled at 308.

The procedure by from 308 to 316 is repeated iteratively until stopping criteria are satisfied, causing the set of live hyperparameter vectors to converge on a region or regions of the hyperparameter space for which a high likelihood of the data is achieved. The stopping criteria may be that a fixed number of iterations has been performed, or may be that the estimated mass of the posterior enclosed by the set of live hyperparameter vectors falls below a predetermined threshold, for example 1% of the total mass of the posterior distribution.

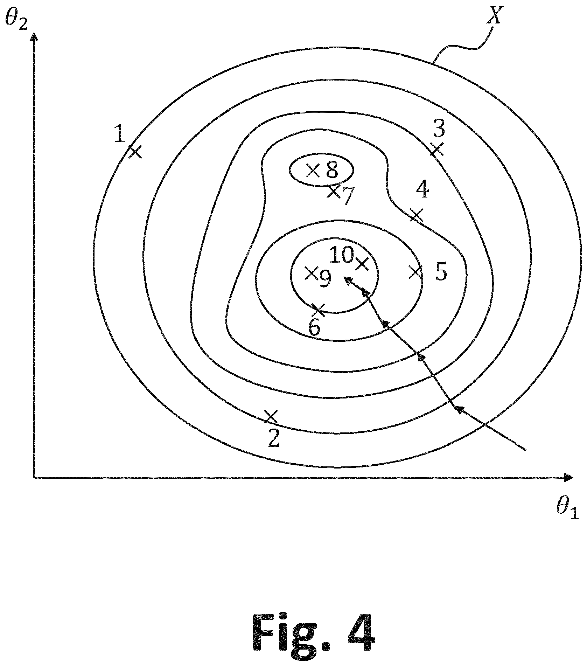

Figure 4 shows contours on which $X = [n_L/(n_L + 1)]^i$ for $i = 1, ... 7$ for an example of a two-dimensional hyperparameter space in which the hyperparameter vector $\theta = (\theta_1, \theta_2)^T$. In this example, a set of three hyperparameter vectors is "live" at any time. The hyperparameter vectors are represented as crosses, with number labels representing the iteration number $i$ at which those hyperparameter vectors are replaced in the set of live hyperparameter vectors. The final three live hyperparameter vectors, labelled 8, 9, 10 are not replaced, and lie within the regions of highest likelihood. It is observed that the replaced points approximately track the contours of the $X$, and therefore the likelihoods $\psi_i$ evaluated for these points approximately correspond to likelihoods for those values of $X$.

The system 200 predicts, at 318, a posterior probability density of the GP evaluated at one or more further input locations, or in other words the predictive probability density for the one or more measured quantities. The posterior probability density of the GP evaluated at a further input location $x^*$ is given by Equation (3):

$$p(f^*|\mathbf{y}) = \int p(f^*|\mathbf{y}, \theta)p(\theta|\mathbf{y})\mathrm{d}\theta = \frac{1}{M}\sum_{i=1}^{M} \mathrm{N}(f^*|\mu_i^*, \Sigma_i^*) \times p_i, \qquad (3)$$

where $\mu_i^* = \mathbf{K}_{\theta_i}^* \left(\mathbf{K}_{\theta_i} + \mathbf{\Sigma}_{\theta_i}\right)^{-1} \mathbf{y}$ and $\Sigma_i^* = \mathbf{K}_{\theta_i}^{**} - \mathbf{K}_{\theta_i}^* \left(\mathbf{K}_{\theta_i} + \mathbf{\Sigma}_{\theta_i}\right)^{-1} \mathbf{K}_{\theta_i}$. Here $\mathbf{K}_{\theta_i} \in \mathbb{R}^{ND \times ND}$ has elements given by the covariances between the training input locations $\{x_j\}_{j=1}^{N}$, $\mathbf{K}_{\theta_i}^* \in \mathbb{R}^{D \times ND}$ has elements given by covariances between the training input locations $\{x_j\}_{j=1}^{N}$ and the further input location $x^*$, and $\mathbf{K}_{\theta_i}^{**} \in \mathbb{R}^{D}$ is given by the variance evaluated at the further training input location $x^*$. The predictive probability density for measurements of the one or more quantities is given by the same distribution with the covariance $\Sigma_i^*$ in each term replaced with

$\Sigma_i^* + \Sigma_{\theta_i}.$ Each of the terms in the sum in Equation (3) corresponds to one of the hyperparameter vectors sampled at 304 or 308 and later discarded, with $i$ denoting the iteration at which the hyperparameter vector $\theta_i$ was discarded, and the values of $p_i$ being a corresponding importance weight for that hyperparameter vector, given by Equation (4):

$$p_i = (X_{i-1} - X_i)\psi_i Z^{-1}, \qquad (4)$$

where $\psi_i$ is the likelihood evaluated for the $i^{th}$ discarded hyperparameter vector and $Z$ is the model evidence, given by

$\int_0^1 \psi(X)\,\mathrm{d}X,$ which is approximated by $\sum_i \psi_i w_i$, with $w_i = X_{i-1} - X_i$ or $w_i = (X_{i-1} - X_{i+1})/2$. The quantity $(X_{i-1} - X_i)$ appearing in Equation (4) represents the mass of the prior associated with the $i^{th}$ discarded hyperparameter vector. In some examples, the remaining $N$ live hyperparameter vectors (which have not been discarded) are added to the sum in Equation (3), each having an importance weight of $p_i = X_M \psi_i Z^{-1}$ for $i = M + 1, ..., N$, and $Z$ is augmented with the sum

$\sum_{i=M+1}^N p_i.$ In other examples, for example where the number of iterations is much greater than the number of live hyperparameter vectors in the set, the remaining $N$ live vectors can be omitted.

In practice, predicting the posterior probability density involves determining the importance weight $p_i$ along with the mean $\mu_i^*$ and covariance $\Sigma_i^*$ of the normal distribution for each hyperparameter vector at the further input location $x^*$. Predictions of the posterior density at the further input location $x^*$ can then be determined by sampling from the distribution of Equation (3). For example, confidence intervals are predicted by drawing multiple samples from the distribution of Equation (3), ordering the results and evaluating quantiles based on the ordered samples. Alternatively, or additionally, the mean and variance of $p(f^*|\mathbf{y})$ can be derived analytically from the mean and variance of the terms in the sum of Equation (3).

The sampling method described above causes the hyperparameter vectors to move towards regions of high likelihood at a predictable rate. The method is better suited at capturing contributions from multiple regions of a multimodal likelihood surface than other sampling methods such as Hamiltonian Monte Carlo, and certainly better suited than methods based on maximum likelihood estimation, for which the resulting predictions are based solely on a single point estimate of the hyperparameter values. Such multimodal likelihood surfaces arise frequently in applications with high-dimensional hyperparameter spaces, such as those resulting from the spectral mixture kernels described herein. As a result, the present method is less prone to overfitting and gives more reliable uncertainty estimates.

When implementing a marginalised GP as described above, it is necessary to specify a choice of prior distribution $p(\theta)$ over the hyperparameters of the GP model. In most situations, a weakly informative prior, such as a lognormal prior, is sufficient for most of the hyperparameters, including the components of the shape hyperparameter $w_q$ for each pair of spectral components, the coefficients $A_{ij}^q$ for each pair of spectral components, and the components of the noise covariance $\Sigma_\theta$. However, the inventors have discovered that it is beneficial to impose a more informative prior on the position hyperparameter $\mu_q$ for each pair of spectral components.

Two properties of the data strongly influence which frequencies we can expect to observe, namely the fundamental frequency and the highest observable frequency. The fundamental frequency $v_F$ is the lowest frequency observable from the data, which results from the fact that the number of data points fall within a finite sampling region of the input space. For example, time series data measured over the course of a single day may be influenced by variations over the course of a year, but such variations will not be observable from the time series data. The fundamental frequency is related to the extent of the sampling region. For one-dimensional input, the fundamental frequency is given by the inverse of the interval spanned by the observed input locations. The highest observable frequency $v_M$ results from the fact that variations occurring on a scale far smaller than the spacing between data points are indistinguishable from lower frequency aliases. For gridded one-dimensional input data, the highest observable frequency is given by the Nyquist frequency, which is half the sampling frequency.

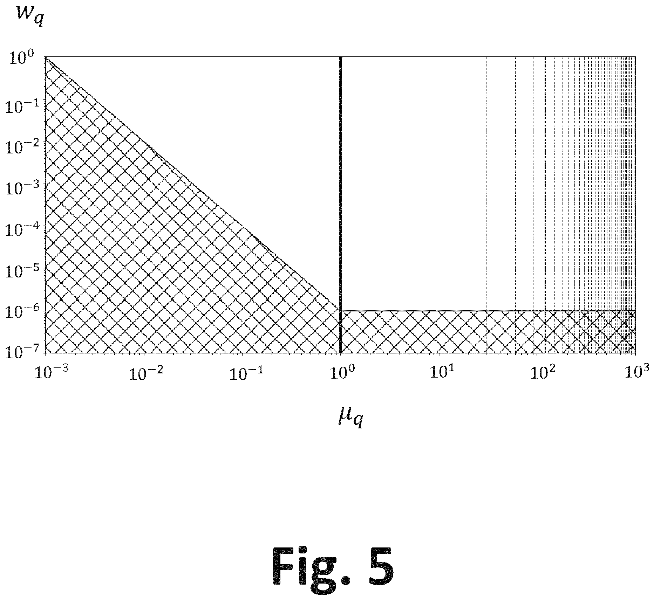

As a result of this aliasing mentioned above, the likelihood surface is littered with degenerate modes with identical likelihood values. From a computational perspective, it is advantageous to restrict the hyperparameter $\mu_q$ to a much narrower range than is permitted by the prior, while maintaining the same probability mass. Figure 5 schematically shows the observability of spectral components in a one-dimensional input domain, as a function of the position $\mu_q$ and bandwidth $w_q$ of the components. The fundamental frequency is denoted by the solid vertical line, while dashed vertical lines indicate multiples of the Nyquist frequency. The hatched region denotes the regime where the variance is deemed too low to be observed. It is observed that mapping the higher-frequency modes to their lower-frequency aliases at $|\mu_q|$ < $v_M$ results in a uniform observability of spectral components in the region $v_F < |\mu_q| < v_M$, and it is therefore appropriate to adopt a uniform prior over this region (for example $\mu_q/v_F \sim$ Uniform(1, $v_M/v_F$) for one-dimensional inputs). Towards very low frequencies $|\mu_q| \ll v_F$, a spectral component contributes very little variance to the observations, meaning that for frequencies much lower than the fundamental frequency, it is less likely that such contributions will be detected. In the present example, this suppressed probability of observations is modelled by a broad Gaussian in log frequency for the regime $|\mu_q| < v_F$ (for example $\mu_q/v_F \sim$ Lognormal(0,7) for one-dimensional inputs). In other examples, other non-uniform distributions may be used which account for supressed observability of spectral components below the fundamental frequency for the data points. The same principle may be extended to multiple-dimensional inputs, for example by making the prior a function of the magnitude of the hyperparameter $\mu_q$, such that spectral components having equal values of $|\mu_q|$ have equal probabilities of being sampled.

Adopting a prior distribution as described above advantageously allows the sampling domain to be restricted to a compact region of hyperparameter space. This further improves the computational efficiency of the method, lessening the demand on computational resources compared with naively exploring a larger region of hyperparameter space, in which case bifurcation of the set of hyperparameter vectors between aliased regions of the hyperparameter space would demand further sampling iterations and/or larger sets of hyperparameter vectors to be used to achieve the same degree of accuracy.

The spectral mixture kernel proposed by Wilson and Adams is based on a superposition of Gaussian components in the spectral domain with mean $\mu_q$ and covariance $w_q$, which corresponds the spectral density of equation (1) with $B(v; \mu_q, w_q) = N(v; \mu_q, w_q)$ and $N = 1$. The resulting kernel, which is a Fourier transform of the spectral density, is given in closed form by Equation (5):

$$K(r) = \sum_{q=1}^{Q} A^q \exp\left(-2\pi^2 r^{\mathrm{T}} w_q r\right) \cos\left(2\pi r^{\mathrm{T}} \mu_q\right), \tag{5}$$

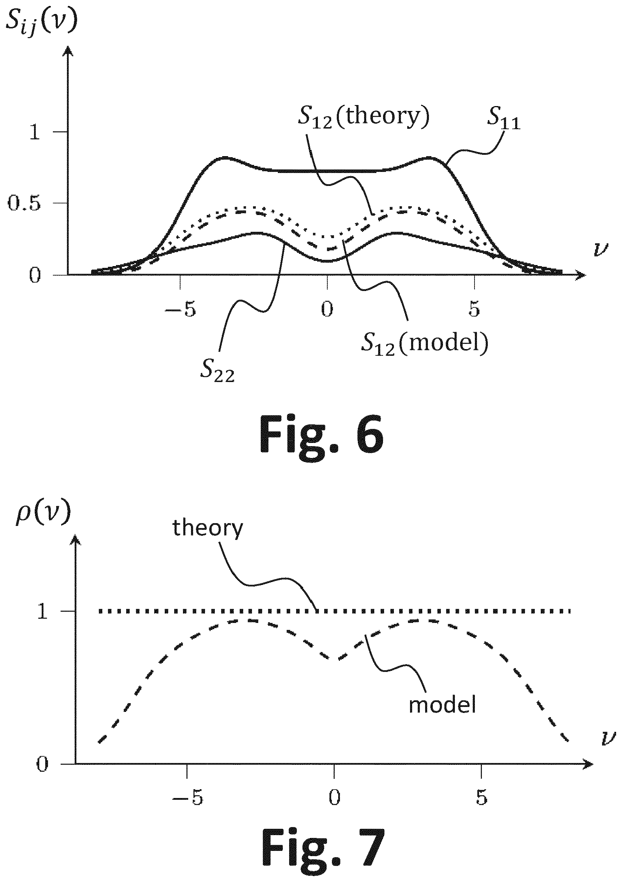

which is valid for one-dimensional inputs or multi-dimensional inputs, where for multidimensional inputs the covariance $w_q$ is a diagonal covariance matrix. One way to extend this model to multi-output GPs is to replace the scalar coefficients $A^q$ with matrix-valued coefficients $A^q = \left[A_{ij}^q\right]$, in which case the kernel would still be expressible in closed form and the resulting GP model would be capable of predicting output values at a set of shared input locations. However, the present inventors have shown that a multi-output GP based on a kernel constructed in this way is unable to capture the full range of spectral densities between output values, meaning that the resulting multi-output GP may not properly account for correlations between the different outputs, leading to erroneous or suboptimal predictions. Figure 6 shows the cross-spectral density components $S_{ij}$ for a two-channel GP with a spectrum comprising two pairs of Gaussian components, with each pair having a different amplitude to the other pair. The dashed line and the dotted line respectively show the maximum cross-spectrum $S_{12}$ attainable between the two channels in theory and using the Gaussian mixture kernel described above. It is observed that the Gaussian mixture model is unable to attain the theoretical maximum power throughout the spectral domain. Figure 7 shows the maximum attainable value of the correlation coefficient $\rho(v)$ between the two channels, which measures if the Fourier modes of the two channels tend to be in phase or out of phase. It is observed that the maximum correlation coefficient between the components is far from its maximum limit. As a result, for highly correlated outputs, the mixture of Gaussian model will fail to account for the correlation between the outputs, and in turn may give results which fail to use all of the information underlying the data.

The missing cross-spectrum shown in in Figure 6, and the missing correlation shown in Figure 7, result from the Gaussian components in the summation of Equation (1) being treated as independent, when in reality this is not the case. There is inevitably some degree of overlap between the tails of any two Gaussian components, due to the Gaussian components being unbounded in the spectral domain. However, correlations which exist between these tails cannot be fully captured by the conventional model.

In order to overcome the above shortcomings, the inventors propose an alternative multi-output spectral mixture kernel, in which each of a set of spectral components has a positive-definite matrix-valued coefficient and extends over a respective bounded region of the spectral domain. In this way, the components can be non-overlapping and the resulting model is able to attain the theoretical maximum values for cross-spectra and correlation coefficients between any pair of outputs. It is noted that the hyperparameters are treated as being independent and it is not necessary to enforce a lack of intersection between the spectral components. For highly correlated outputs, the highest likelihood contributions will naturally occur for non-overlapping components. It is noted that enforcing a lack of intersection between the spectral components would add unnecessary complication to the inference method and is not justified on a theoretical basis.

In a first example, each of the spectral components is a hyper-rectangle with a matrix-valued coefficient, corresponding to the spectral density of Equation (1) with $\mu_q$ indicating a position of the hyper-rectangle (for example a position of a centre or another prescribed part of the hyper-rectangle such as a given vertex), and components of $w_q$ indicating the dimensions of the hyper-rectangle. The resulting kernel is given by Equation (6):

$$K_{ij}(r) = \sum_{q=1}^{Q} A_{ij}^q \cos(2\pi r^{\mathrm{T}} \mu_q) \prod_{p=1}^{P} \mathrm{sinc}\left(r^{(p)} w_q^{(p)}\right), \qquad (6)$$

where P is the number of dimensions of the input space and the product is over the corresponding $P$ dimensions of the spectral domain.

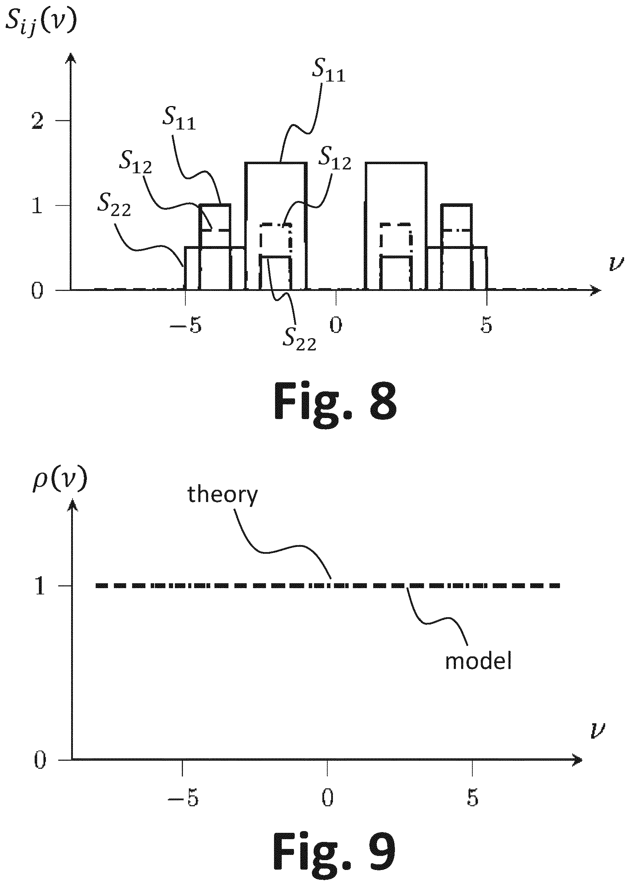

Figure 8 shows the cross-spectral density components $S_{ij}$ for a two-channel GP with a spectrum comprising two pairs of rectangular components, with each pair having a different amplitude to the other pair. In this case, the maximum cross-spectrum $S_{12}$ between the two channels attained using the spectral mixture kernel is equal to the theoretical maximum. As shown in Figure 9, the model is also able to attain the theoretical maximum value of the correlation coefficient $\rho(v)$ between the two channels. This demonstrates that the multi-output GP model based on the spectral mixture of hyper-rectangles is suitable for modelling data with correlated outputs.

In a further example for multi-dimensional input spaces, each spectral component is a hyper-ellipsoid as opposed a hyper-rectangle. In this case, $\mu_q$ indicates a position of the hyper-ellipsoid (for example a position of a centre or other prescribed part of the hyper-ellipsoid), and $w_q$ controls the length of the axes of the hyper-ellipsoid. In this case, the resulting kernel is given by Equation (7):

$$K_{ij}(r) = \sum_{q=1}^{Q} A_{ij}^q \|r \circ w\|^{P/2} \cos(2\pi r^{\mathrm{T}} \mu_q) J_{P/2}(\|r \circ w\|), \qquad (7)$$

where $\|\cdot\|$ denotes the Euclidian norm and J denotes a Bessel function of the first kind. In this example, each term in the sum involves a single Bessel function, rather than a product of sinc kernels. In examples where the data has a high input dimension $P$ (for example, where the input for each data point includes an image), using hyper-ellipsoids therefore results in a lower computational cost for evaluating the covariance matrix $K_\theta$. The kernels of Equations (6) and (7) are exemplary only, and other kernels fall within the scope of the present invention, in particular any multi-output kernel based on a set of spectral components each having a positive-definite matrix-valued coefficient and extending over a respective bounded region of the spectral domain. It is further noted that the kernels described above may be used in conjunction with other sampling methods or optimisation methods, and with other types of model, for example non-marginalised models in which predictions are based on a best set of hyperparameters determined using maximum likelihood estimation.

It is noted that a GP based on the spectral density of Equation (1), in which the function $B$ is independent of the indices $i,j$ such that the outputs of the GP share a common spectral component, ensures that the number of free parameters in the model grows only in proportion to the number of spectral components, rather than at a higher rate, as would be the case if different outputs were associated with different spectral components. This restriction prevents the computational cost of the method from becoming prohibitive when a large numbers of spectral components is required. The prescription of Equation (1) still allows the full cross-spectrum to be accessed, as explained above. Due to the matrix-valued coefficients $A^q$, the number of hyperparameters involved grows quadratically with the number of output dimensions $D$, though using a low rank decomposition of $A^q$ can be used to reduce this dependence.

An application to which the present methods are well-suited is the modelling of time-series data in which a transition from a first behaviour to a second behaviour is observed. Such data cannot be accurately modelled by a GP model with a stationary kernel. A known method for modelling such data is to assume that the data is generated by a non-stationary process which is a linear combination of two stationary GPs, as shown by Equation (8):

$$f(t) = s(t-a)f_1(t) + \left(1 - s(t-a)\right)f_2(t), \qquad (8)$$

where $a$ denotes a transition time, which may be known or may be treated as an unknown hyperparameter, $s(\cdot)$ denotes a transition function which has the properties that $s(t \rightarrow -\infty) = 0$ and $s(t \rightarrow +\infty) = 1$. The transition function may, for example, be a sigmoid function such as the logistic function, the hyperbolic tangent function, or the error function. Each of the GPs $f_1(t)$, $f_2(t)$ may have a single output or multiple outputs, and are conventionally treated as being independent from one another. However, assuming the GPs are independent results in a loss of variance of $f(t)$ at the transition point due to the failure of the model to properly capture cross-covariances between correlated GPs as explained above.

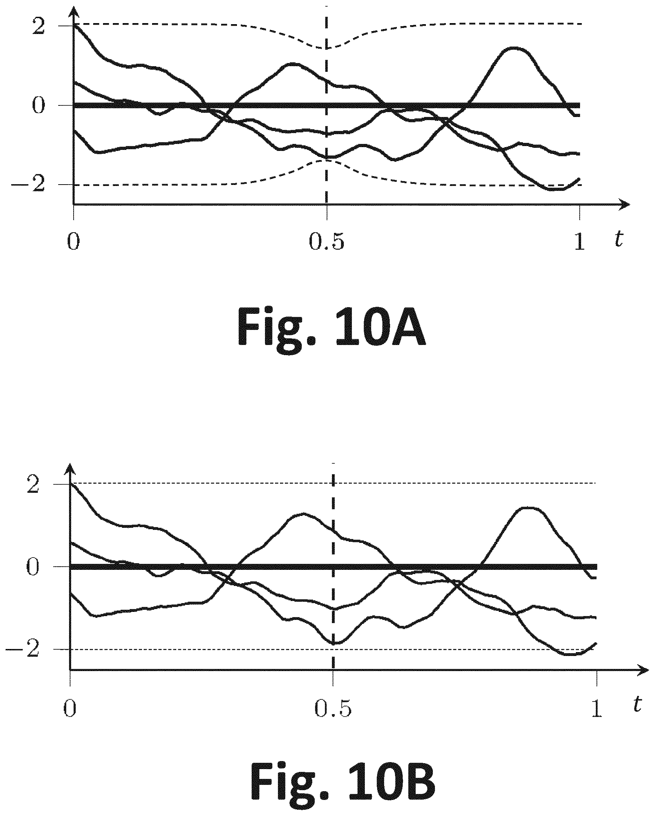

Figure 10A shows samples taken from the process of Equation (8), in an example where two single-channel GPs $f_1(t)$, $f_2(t)$ have identical kernels, with a transition time is at $t = 0.5$ The dashed curves show 95% confidence intervals for the resulting process $f(t)$. It is observed that there is a loss of variance around the transition point, which is an artefact of the problem discussed above and lacks theoretical justification. As shown in Figure 10B, by instead treating the GPs $f_1(t)$, $f_2(t)$ as separate channels of a multi-output GP using a kernel based on a mixture of rectangular components, the same variance remains even at the transition time, as the model properly captures the cross-covariances between the two channels. More generally, a non-stationary process with one or more channels and having a transition at input location $t = a$ can be constructed using Equation (8), with $f_1(t)$ and $f_2(t)$ each corresponding to an equal number of channels of a single- or multi-output GP based on a mixture of spectral components each having a positive-definite matrix-valued coefficient and extending over a respective bounded region of the spectral domain.

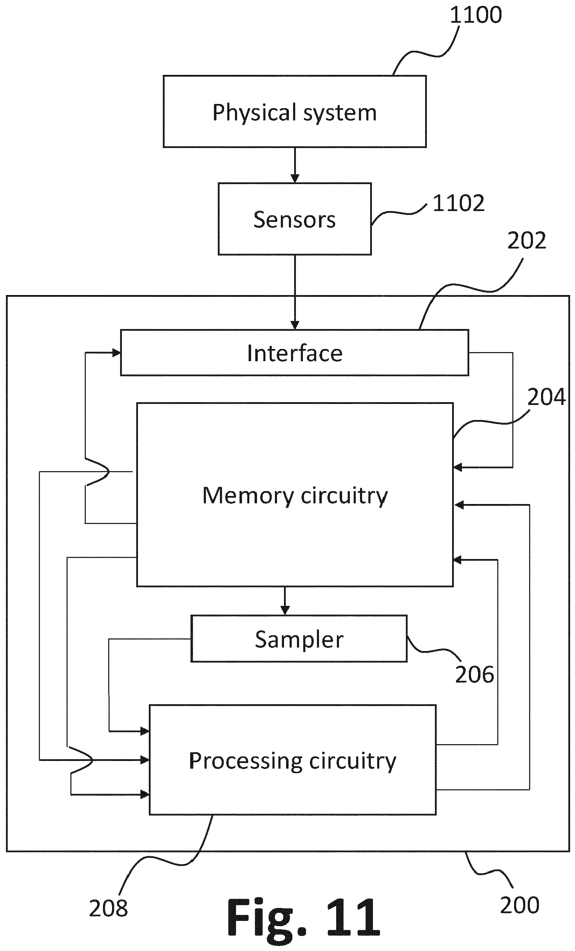

As mentioned above, the sampling method and kernels discussed above are particularly well-suited to determining values for a set of parameters of a physical system. Figure 11 shows an example in which the data processing system 200 of Figure 2 is used to determine values for a set of parameters of a physical system 1100. In this example, the physical system 1100 includes components of a vehicle. Specifically, the physical system 1100 includes aerodynamic components of the vehicle for which various geometrical parameters can be modified (for example, by modifying an angle of a moveable wing of an existing prototype, or by manufacturing an entirely new prototype). In other examples, a physical system could be another part of a vehicle such as an engine or a braking system, or a part thereof, or could be an entire vehicle. Alternatively, a physical system could be, for example, any type of mechanical system, electrical system, chemical system, or a combination of the above. In this case, each of the input locations $x_i$ is indicative of a candidate set of values for one or more parameters of the physical system, with each dimension of the input portion corresponding to one of the parameters. The one or more outputs $y_i$ an indicative of, or are derived from, characteristics of the physical system 1100 as measured by one or more sensors 1102. The measured characteristics may include measures of performance of the physical system 1100 in accordance with one or more performance metrics. In the example in which the physical system 1100 includes aerodynamic components of a vehicle, the characteristics include measurements of downforce and drag generated when air is passed over the aerodynamic components at a given flow rate. In an example in which a physical system is an engine or part of an engine, the parameters may be tuneable physical parameters of the engine, or parameters associated with an electronic engine management system for controlling the engine. The measurable characteristics may include, for example, power output, torque, and/or fuel consumption under a predetermined set of test conditions.

The use of a marginalised GP model with a spectral mixture kernel allows for predictions of these characteristics to be made in a principled, Bayesian manner without risk of overfitting and underestimating uncertainty in the predictions. Furthermore, the use of the sampling method described above allows for a computationally efficient implementation of the marginalised GP model. The multi-output kernels described herein can be used to make predictions of the measurable characteristics for new, possibly unseen sets of parameter values for the physical system 1100. In some cases, characteristics such as downforce and drag may be highly correlated, in which case existing spectral mixture kernels are unsuitable for the reasons explained above. By contrast, the use of a kernel with non-overlapping spectral components can allow for such correlations to be captured. The resulting predictions can be used to guide further choices of parameter values of the physical system 1100, for example using Bayesian optimisation. Furthermore, in some examples in which data points correspond to values of parameters and measurable characteristics of a physical system, the values of the measurable characteristics may be derived from numerical simulations of the physical system, as opposed to being derived from measurements of the physical system itself.

The methods described above are not limited to the optimisation of parameter values for a physical system, and can be used in any other regression setting where GP models are applicable. In such settings, the output $y$ is a scalar or vector quantity representing an attribute measured at an input location $x$. Regression problems arise, for example, in weather forecasting, climate modelling, disease modelling, medical diagnosis, time-series modelling, engineering applications, and a broad range of other applications.

The above embodiments are to be understood as illustrative examples of the invention. Further embodiments of the invention are envisaged. For example, the multi-output spectral mixture kernels described herein may be used with other sampling methods such as Hamiltonian Monte Carlo, or maximum likelihood estimation, and are appropriate for any application where it is desired to predict values of measurable quantities that are expected to be correlated. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A computer-implemented method of processing a plurality of data points, each data point of the plurality of data points comprising observations of one or more quantities for a respective input within an input space, to predict posterior probability densities of values of the plurality of quantities at one or more further inputs within the input space, the method comprising:

   sampling a set of hyperparameter vectors from a predetermined prior distribution, each hyperparameter vector in the set comprising respective hyperparameter values characterising a plurality of spectral components of a kernel for a multi-output Gaussian process model, each of the plurality of spectral components having a positive-definite matrix-valued coefficient and extending over a respective bounded region of a spectral domain;
   determining, for each of the hyperparameter vectors in the set, a likelihood for the plurality of data points under the Gaussian process model with the respective hyperparameter values of that hyperparameter vector;
   iteratively, until a stopping condition is satisfied:

      sampling a new hyperparameter vector from the predetermined prior distribution, the new hyperparameter vector comprising a new set of hyperparameter values;
      determining a likelihood of the plurality of data points under the Gaussian process model with new set of hyperparameter values; and
      in the event that the determined likelihood for the new hyperparameter vector exceeds a lowest determined likelihood for the hyperparameter vectors in the set:

         estimating a mass of the predetermined prior distribution enclosed by the current set of hyperparameter vectors;
         storing an intermediate data item indicating the lowest determined likelihood of any hyperparameter vector within the set and the estimated mass of the predetermined prior distribution enclosed by the set of hyperparameter vectors; and
         replacing the hyperparameter vector having the lowest determined likelihood with the new hyperparameter vector, whereby to update the set of hyperparameter vectors,

   the method further comprising predicting, using the stored intermediate data items, the posterior probability densities of the values of the one or more of quantities at the one or more further inputs within the input space.

2. The method of claim 1, wherein each of the plurality of spectral components is a hyper-rectangle, and the respective hyperparameter values indicate a respective position and respective dimensions of each of the hyper-rectangles.

3. The method of claim 1, wherein each of the plurality of spectral components is a hyper-ellipsoid, and the respective hyperparameter values indicate a respective position and respective dimensions of each of the hyper-ellipsoids.

4. The method of any preceding claim, wherein the multi-output Gaussian process model comprises a transition from a first one or more outputs to a second one or more outputs at a transition input in the input space.

5. The method of any preceding claim, wherein a component of the predetermined prior distribution comprises, for positions of the plurality of spectral components:

   a uniform region between a fundamental frequency and a maximum observable frequency for the plurality of data points; and
   a non-uniform region below the fundamental frequency of the for the plurality of data points,
   wherein the non-uniform region accounts for supressed observability of spectral components below the fundamental frequency for the plurality of data points.

6. The method of claim 5, wherein the non-uniform region comprises a log-Gaussian distribution.

7. The method of any preceding claim, wherein the respective input for each data point corresponds to a time at which the one or more of quantities are measured.

8. The method of any of claims 1 to 6, wherein:

   the respective input for each data point corresponds to a respective value or set of values for one or more parameters of a physical system; and
   the one or more of quantities are one or more measurable characteristics of the physical system.

9. The method of claim 8, wherein:

   the physical system comprises one or more components of a vehicle; and
   the one or more parameters of the physical system are parameters of the one or more components of the vehicle.

10. The method of claim 9, wherein the one or more components of the vehicle include at least part of: an engine; an aerodynamic component; and/or a braking system.

11. The method of any of claims 8 to 10, further comprising obtaining the plurality of data points by measuring, using one or more sensors, the characteristics of the physical system for each candidate set of values for the one or more parameters of the physical system.

12. The method of any of claims 8 to 11, further comprising determining, in dependence on the predicted posterior probability densities of the values of the one or more quantities at the one or more further inputs within the input space, a further set of values for the one or more parameters of the physical system.

13. A system arranged to process a plurality of data points each comprising observations of one or more quantities for a respective input within an input space, to predict posterior probability densities for values of the one or more quantities at one or more further inputs within the input space, the system comprising processing circuitry and memory circuitry, wherein the memory circuitry comprises machine-readable instructions which, when executed by the processing circuitry, cause the system to:

    sample a set of hyperparameter vectors from a predetermined prior distribution, each hyperparameter vector in the set comprising respective hyperparameter values characterising a plurality of spectral components of a kernel for a multi-output Gaussian process model, each of the plurality of spectral components having a positive-definite matrix-valued coefficient and extending over a respective bounded region of a spectral domain;
    determine, for each of the hyperparameter vectors in the set, a likelihood for the plurality of data points under the Gaussian process model with the respective hyperparameter values of that hyperparameter vector;
    iteratively, until a stopping condition is satisfied:

        sample a new hyperparameter vector from the predetermined prior distribution, the new hyperparameter vector comprising a new set of hyperparameter values;
        determine a likelihood of the plurality of data points under the Gaussian process model with new set of hyperparameter values; and
        in the event that the determined likelihood for the new hyperparameter vector exceeds a lowest determined likelihood for the hyperparameter vectors in the set:

            estimate a mass of the predetermined prior distribution enclosed by the current set of hyperparameter vectors;
            store an intermediate data item indicating the lowest determined likelihood of any hyperparameter vector within the set and the estimated mass of the predetermined prior distribution enclosed by the set of hyperparameter vectors; and
            replace the hyperparameter vector having the lowest determined likelihood with the new hyperparameter vector, whereby to update the set of hyperparameter vectors; and

    predict, using the stored intermediate data items, the posterior probability densities for values of the one or more quantities at the one or more further inputs within the input space.

14. The system of claim 13, further comprising one or more sensors, wherein:

the respective input for each data point corresponds to a respective value or set of values for one or more parameters of a physical system;

the one or more of quantities are measurable characteristics of the physical system; and

the system is arranged to obtain the plurality of data points by measuring, using the one or more sensors, the characteristics of the physical system for each value or set of values for the one or more parameters of the physical system.

15. A computer program product comprising machine-readable instructions which, when executed by a computing system, cause the computing system to perform the method of any of claims 1 to 12.

## Fig. 1A

## Fig. 1B

200

202

Interface

204

Memory circuitry

Data points

Predictions

Intermediate data

Hyperprior

Sampler

206

Processing circuitry

Likelihood eval

Posterior eval

# Fig. 2

208

```
┌─────────────────────────┐
│    Obtain data points   │──╮
└─────────────────────────┘  │  302
             │
             ▼
┌─────────────────────────┐
│    Sample live vectors  │──╮
└─────────────────────────┘  │  304
             │
             ▼
┌─────────────────────────┐
│  Evaluate likelihood for each │──╮
│        live vector       │  │  306
└─────────────────────────┘
             │
             ▼
┌─────────────────────────┐
│   Sample new live vector │──╮
└─────────────────────────┘  │  308
             │
             ▼
┌─────────────────────────┐
│  Evaluate likelihood for new │──╮
│        live vector       │  │  310
└─────────────────────────┘
             │
             ▼
          ◇ Keep new
    No ◇   live vector? ◇
             │
            Yes
             ▼
┌─────────────────────────┐
│  Estimate enclosed prior │──╮
│         volume           │  │  312
└─────────────────────────┘
             │
             ▼
┌─────────────────────────┐
│  Store intermediate data │──╮
└─────────────────────────┘  │  314
             │
             ▼
┌─────────────────────────┐
│    Replace live vector   │──╮
└─────────────────────────┘  │  316
             │
             ▼
┌─────────────────────────┐
│  Predict probability density │──╮
└─────────────────────────┘  │  318
```

Until stopping criteria satisfied

# Fig. 3

**Fig. 4**

# Fig. 5

**Fig. 6**

**Fig. 7**

**Fig. 8**

**Fig. 9**

# Fig. 10A

# Fig. 10B

1100

Physical system

1102

Sensors

202

Interface

204

Memory circuitry

Sampler

206

Processing circuitry

208

200

# Fig. 11

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN ZEXUN ET AL: "How priors of initial hyperparameters affect Gaussian process regression models", NEUROCOMPUTING, ELSEVIER, AMSTERDAM, NL, vol. 275, 2 November 2017 (2017-11-02), pages 1702-1710, XP085310305, ISSN: 0925-2312, DOI: 10.1016/J.NEUCOM.2017.10.028 * paragraph [0002] - paragraph [0003] * ----- | 1-15 | INV. G06F17/18 G06N7/00 |

TECHNICAL FIELDS
SEARCHED (IPC)

G06F
G06N

The present search report has been drawn up for all claims

| Place of search | Date of completion of the search | Examiner |
|---|---|---|
| The Hague | 14 April 2021 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                     
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. WILSON ; R. ADAMS.** Gaussian Process Kernels for Pattern Discovery and Extrapolation. *International Conference on Machine Learning,* 2013
- **F. TOBAR.** *Band-Limited Gaussian Processes: The Sinc Kernel,* 2019
- **V. LACHLAND ; C. RASMUSSEN.** Approximate Inference for Fully Bayesian Gaussian Process Regression. *Proceedings of Machine Learning Research,* 2020
- **J. SKILLING.** Nested Sampling for General Bayesian Computation. *Bayesian Analysis,* 2006
- **F. FEROZ et al.** MULTINEST: an efficient and robust Bayesian inference tool for cosmology and particle physics. *MNRAS,* 2009